# EUROPÄISCHE PATENTANMELDUNG

(11) **EP 3 680 848 A1**
(43) Veröffentlichungstag der Anmeldung: **15.07.2020**
(21) Anmeldenummer: 19151175.7
(22) Anmeldetag: 10.01.2019
(51) Int. Cl.: G06Q 50/04, H04L 9/32

(54) **SICHERES BEREITSTELLEN EINES PRODUKTIONSDATENSATZES**

(71) Anmelder: Siemens Aktiengesellschaft, 80333 München (DE)
(72) Erfinder: Gentner, Friedrich, 91086 Aurachtal (DE)

(57) **Zusammenfassung**

Die Erfindung betrifft ein Verfahren zum sicheren Bereitstellen eines Produktionsdatensatzes (PD) für ein Produkt (PR). Die Erfindung betrifft weiterhin eine Komponente (Cl, C2, C3), eine Erweiterungskomponente ein System (100) und ein Produktionsleitsystem (MES). Um auf sichere Art und Weise einen Produktionsdatensatz zur Verfügung zu stellen, anhand dessen nachvollziehbar ist, welche Komponenten an der Produktion eines Produkts beteiligt waren werden folgende Schritte vorgeschlagen:
- Erhalten (S1) zumindest eines Rohdatensatzes (RAW.PD), der einem Vorprodukt (PRE.PR) zugeordnet ist,
- Generieren (S2) zumindest eines Teil-Produktionsdatensatzes (PD1, PD2, PD3) durch digitales Signieren (S21) zumindest eines Teils des Rohdatensatzes (RAW.PD), wobei das digitale Signieren (S21) mit einem privaten Schlüssel (K.PRV) einer ersten Komponente (Cl, C2, C3) erfolgt, die am Vorprodukt (PRE.PR) zumindest einen Produktionsschritt (MFS1, MFS2, MFS3) durchführt.

## Beschreibung

Die Erfindung betrifft ein Verfahren zum sicheren Bereitstellen eines Produktionsdatensatzes für ein Produkt sowie eine Komponente, eine Erweiterungskomponente ein Produktionssystem und ein Produktionsleitsystem.

Um nachvollziehen zu können, mit welchen Komponenten ein bestimmtes Produkt zu welchem Zeitpunkt hergestellt worden ist, gibt es in bestimmten Industrien Nachweispflichten. Zu den Komponenten zählen dabei Fertigungsmaschinen, Verpackungsmaschinen, Materialförderanlagen aber auch Ventile, Mischvorrichtungen, Prozessbehälter sowie (Industrie-)Steuerungen, Sensoren und Aktoren. Wenn z. B. bei einer Maschine ein Defekt festgestellt worden ist, der zu einer Verunreinigung eines Produkts oder zu Defekten an einem Produkt führen kann, ist es sinnvoll festzustellen, welche unter Beteiligung dieser Komponenten hergestellten Produkte von dem Defekt betroffen sein können. In modernen Produktionsanlagen und mit aufkommenden Forderungen nach geringen Losgrößen (im Extremfall Losgröße 1) wird es immer wichtiger, exakt und sicher nachzuvollziehen, welche Komponenten an der Fertigung eines Produkts beteiligt waren.

Es ist Aufgabe der vorliegenden Erfindung auf sichere Art und Weise einen Produktionsdatensatz zur Verfügung zu stellen, anhand dessen nachvollziehbar ist, welche Komponenten an der Produktion eines Produkts beteiligt waren. Es ist weiterhin Aufgabe der vorliegenden Erfindung eine Komponente, ein Produktionssystem sowie ein Produktionsleitsystem zur Teilnahme an diesem Verfahren anzugeben.

Die Aufgabe wird durch ein Verfahren zum sicheren Bereitstellen eines Produktionsdatensatzes gemäß Anspruch 1 gelöst. Der Produktionsdatensatz ist dabei jeweils einem Produkt zugeordnet. Das Verfahren umfasst das Erhalten zumindest eines Datensatzes, der einem Vorprodukt zugeordnet ist. Das Verfahren umfasst ferner das Generieren zumindest eines Teilproduktionsdatensatzes. Der Teilproduktionsdatensatz wird durch digitales Signieren zumindest eines Teils des Rohdatensatzes generiert, wobei das Signieren mit einem privaten Schlüssel einer ersten Komponente erfolgt, die am Vorprodukt zumindest einen Produktionsschritt durchführt.

Das Produkt im Sinne des erfindungsgemäßen Verfahrens ist nicht zwangsläufig ein endgültig fertiggestelltes Produkt für einen Endkunden, sondern stellt das Produkt des erfindungsgemäßen Verfahrens dar. Das Produkt kann auch das Ergebnis eines in sich abgeschlossenen Zwischenschritts in einem größeren Prozess darstellen.

Das Vorprodukt sind jegliche für das Produkt zur Verfügung gestellte Rohstoffe, Bauteile, Baugruppen und Materialien. Es können mehrere verschiedene oder gleichartige Vorprodukte zur Verfügung gestellt werden. Beispielsweise könnte dies eine fertige Baugruppe, die zu weiteren Verwendung in eine Vorrichtung eingebaut wird, sein. Analog kann in der Prozessindustrie ein Vorprodukt ein Rohstoff oder bereits eine Vorstufe eines Gemisches sein, der durch den Produktionsschritt weiterverarbeitet wird, um zu einem Endprodukt verarbeitet zu werden.

Der dem Vorprodukt zugeordnete Rohdatensatz stellt einen Datensatz dar, der mit dem Vorprodukt zur Verfügung gestellt wird. Der Rohdatensatz kann von der Komponente, die den Produktionsschritt durchführt, ergänzt oder unverändert übernommen werden. Der Rohdatensatz wird idealerweise in einem genormten Datenformat zur Verfügung gestellt, solche Formate können bspw. gemäß OPC UA, dem Referenzarchitekturmodell Industrie 4.0 (RAMI 4.0), eCl@ss oder Kombinationen daraus bereitgestellt werden. Der Rohdatensatz kann beispielsweise eine Seriennummer, Daten von Materialeigenschaften, Zeitstempel, Chargennummern, etc. enthalten. Die Rohdaten ermöglichen, dass mit hinreichender Genauigkeit identifizierbar ist, welches Vorprodukt in den Produktionsschritt gelangt ist. Solche Daten können beispielsweise von einem Produktionsleitsystem oder im Englischen "manufacturing execution system" MES zur Verfügung gestellt werden.

Das Erhalten des Rohdatensatzes kann beispielsweise durch bereitstellen von einer Datenbank, die z. B. mit einem MES-System verbunden ist, ausgeführt werden. Die Komponente kann alternativ oder ergänzend selbst einen Rohdatensatz generieren, in dem sie sich die notwendigen Daten selbst zusammenstellt. Wenn die Komponente eine Industriesteuerung oder eine Komponente mit entsprechend erweiterten Fähigkeiten ist, so kann diese für die ihr zugeordneten Komponenten ein derartiges Erhalten durchführen.

Der Produktionsschritt ist die Tätigkeit, die die Komponente am Vorprodukt durchführt bzw. die unter Beteiligung der Komponente am Vorprodukt durchgeführt wird. Ein Produktionsschritt kann jeder mechanische, chemische, biologische, digitale, elektrische und/oder physikalische Produktionsschritt sein. Kombinationen von mechanischen, chemischen, biologischen, digitalen, elektrischen und/oder physikalischen Produktionsschritten können wiederum zu einem oder mehreren Produktionsschritten zusammengefasst werden. Beispiele aus der Prozessindustrie umfassen: das Mischen verschiedener Rohstoffe zu einem bestimmten Stoffgemisch, das Pressen eines Stoffgemisches in eine Form, um dieses z. B. als Tabletten zur Verfügung zu stellen, oder das Abpacken einzelner Elemente in ein größeres Gebinde, wie beispielsweise eine Tüte oder eine Blisterverpackung.

An jedem einzelnen Produktionsschritt sind jeweils Komponenten beteiligt, die den Produktionsschritt durchführen. So kann beispielsweise eine Verpackungsmaschine einen Verpackungsprozess durchführen, an dem innerhalb der Verpackungsmaschine wiederum eine Vielzahl von Sub-Komponenten beteiligt sein können. Derartige Sub-Komponenten sind z.B. Motoren zum Bewegen von Maschinenteilen oder zum Fördern des (Vor-)Produkts, Heißluftgebläse, zum Verschmelzen von Kunststoffen, oder Kameras zur Qualitätsprüfung des Produkts (bzw. der Verpackung).

Werden mehrere Produktionsschritte hintereinander durchgeführt, so kann der Teilproduktionsdatensatz mit einem weiteren Rohdatensatz ergänzt werden. Ein Teilproduktionsdatensatz aus dem vorigen Produktionsschritt kann für den nächsten Schritt als Rohdatensatz dienen. Wird das Verfahren in jedem Schritt durchgeführt, entsteht ein vollständiges und durch die digitalen Signaturen abgesichertes Paket an Teil-Produktionsdatensätzen, die wiederum als Produktionsdatensatz für das Endprodukt zur Verfügung gestellt werden können.

Der private Schlüssel kann beispielsweise ein privater Schlüssel einer PKI-Infrastruktur sein. Das digitale Signieren, auch digitales Signaturverfahren oder digitale Signatur, ist ein asymmetrisches Kryptosystem, bei dem die an dem Produktionsschritt beteiligte Komponente mit ihrem privaten Schlüssel (dem "Private Key") zu dem Rohdatensatz, der ggf. noch durch weitere Daten ergänzt wurde, einen Wert berechnet, der ebenfalls digitale Signatur genannt wird. Dieser Wert ermöglicht es jedem, mit Hilfe des öffentlichen Verifikationsschlüssels (dem "Public Key") die nicht abstreitbare Urheberschaft und Integrität der Nachricht zu prüfen. Um eine mit einem privaten Schlüssel erstellte Signatur einer Komponente zuordnen zu können, muss der zugehörige Verifikationsschlüssel dieser Komponente eindeutig und zweifelsfrei zugeordnet sein. Dies kann beispielsweise durch eine einem MES System zugeordnete Datenbank geschehen, in der sogenannte Schlüsselzertifikate und deren Zuordnung zu den Komponenten hinterlegt sind.

In einer weiteren vorteilhaften Ausführungsform wird das Produkt durch Ausführen einer oder mehrerer Produktionsschritte am Vorprodukt hergestellt. Das Verfahren ist besonders vorteilhaft, wenn mehrere Produktionsschritte zum Herstellen des Produkts notwendig sind, da so ein über die Produktionsschritte hinweg konsistenter und verifizierbarer Produktionsdatensatz entsteht, der für das Produkt zur Verfügung steht.

In einer weiteren Ausführungsform umfasst das Verfahren den Schritt des Bereitstellens eines Produktionsdatensatzes durch Zusammenfassen von mehreren Teil-Produktionsdatensätzen. Diese Teil-Produktionsdatensätze können beim Zusammenfassen nochmals optimiert werden, z. B. können überflüssige und/oder redundante Daten entfernt und anschließend eine übergeordnete Signatur bereitgestellt werden Die Signatur kann bestätigen, dass die Teil-Produktionsdatensätze dem entsprechen, was den Teil-Produktionsdatensätzen und ihren Signaturen zu entnehmen ist. Ergänzend oder alternativ kann eine übergeordnete Instanz durch ihre digitale Signatur des Produktionsdatensatzes sicherstellen und/oder bestätigen, dass die untergeordneten Signaturen authentisch sind - das heißt z. B., dass die Komponenten, die mit ihrem privaten Schlüssel unterschrieben haben auch tatsächlich an den Produktionsschritten beteiligt waren, für die sie unterschrieben haben. Das Zusammenfassen kann durch die Komponenten selbst für die vorhergehenden Produktionsschritte mit dem aktuellen Produktionsschritt durchgeführt werden; das Zusammenfassen kann aber auch für alle Komponenten durch eine übergeordnete Komponente wie ein Produktionsleitsystem durchgeführt werden. Dies kann sequentiell geschehen oder am Ende jedes Produktionsprozesses.

In einer weiteren Ausführungsform signiert die Komponente für an dem Produktionsschritt beteiligte Sub-Komponenten. Dies kann beispielsweise der Fall sein, wenn eine Steuerung oder eine komplexere Fertigungsmaschine mehrere Sensoren und Aktoren ansteuert. So kann die Komponente eindeutige Kennungen der Sub-Komponenten auslesen, wobei diese Kennung auch eine kryptografische Kennung oder ein Schlüsselzertifikat sein kann. Die Kennung kann in den Teil-Produktionsdatensatz einfügt werden und die übergeordnete Komponente kann dann für diese Sub-Komponenten mitsignieren. Dies hat den großen Vorteil, dass nicht jeder Sensor und jeder Aktor selbst eine Signatur durchführen muss, sondern dies auf sichere Art und Weise an ein übergeordnetes leistungsstärkeres Gerät delegiert werden kann. So muss nicht jede kleinere Komponente einen eigenen eindeutigen privaten Schlüssel zugewiesen bekommen und auch nicht die zum Signieren notwendige Rechenleistung bereitstellen.

In einer weiteren Ausführungsform wird der erste Datensatz um Prozessdaten des Produktionsschritts ergänzt. Vorzugsweise werden die Prozessdaten mit dem privaten Schlüssel der Komponente mitsigniert. So ist nicht nur nachvollziehbar, dass eine Komponente tatsächlich am Produktionsprozess beteiligt war, sondern auch die in den Produktionsdaten enthaltenen Zustandsinformationen können ausgewertet werden. Dabei können insbesondere Zustandsinformationen, die einen Rückschluss auf die Qualität zulassen, von Interesse sein. Beispiele für Zustandsdaten des (Teil-)Produkts sind Prozesstemperaturen, die im Produktionsschritt vorgeherrscht haben, Viskositäten und Fließgeschwindigkeiten. Auch Zustandsdaten der Komponente selbst, wie beispielsweise eine Drehzahl eines Motors können mit aufgenommen werden.

In einer weiteren Ausführungsform wird der Rohdatensatz durch Komponentendaten der an dem Produktionsschritt beteiligten Komponente und/oder Sub-Komponenten ergänzt. So können beispielsweise Informationen über den aktuellen Stand der Firmware oder Updates ergänzt werden, so dass ein noch sicheres Bereitstellen des Produktionsdatensatzes garantiert werden kann.

In einer weiteren Ausführungsform wird der Produktionsdatensatz auf Basis aller relevanten Teil-Produktionsdatensätze bereitgestellt. Die relevanten Teildatensätze können dabei alle Teildatensätze umfassen. Zusätzlich oder alternativ können einzelne Teildatensätze nicht in den Produktionsdatensatz eingefügt werden, sofern diese keinen Einfluss auf die Produktqualität haben. So kann trotz Bereitstellen und Signieren aller qualitätsrelevanten Informationen ein effizienter und speicheroptimaler Produktionsdatensatz zur Verfügung gestellt werden.

Die Aufgabe wird weiterhin gelöst durch eine Komponente, die einen privaten Schlüssel aufweist, wobei der private Schlüssel zum digitalen Signieren eines Rohdatensatzes dient. Die Komponente ist ferner zum Durchführen, zumindest eines Produktionsschrittes an ein Vorprodukt, ausgebildet. Zum Durchführen eines erfindungsgemäßen Verfahrens kann die Komponente ferner zum Generieren zumindest eines Teilproduktionsdatensatzes durch digitales Signieren zumindest eines Teils des Rohdatensatzes ausgebildet sein. Die digitale Signatur wird mit dem Schlüssel der Komponente durchgeführt.

Die Komponente kann ferner einen Prozessor und/oder einen Speicher aufweisen. Der Speicher weist den privaten Schlüssel auf und kann zum nichtflüchtigen Speichern des Schlüssels ausgebildet sein. Der Prozessor ist zum digitalen Signieren zumindest eines Teils eines Rohdatensatzes ausgebildet, der dem Vorprodukt zugeordnet ist. Das digitale Signieren wird mittels des privaten Schlüssels durchgeführt.

Weiterhin wird das Problem durch eine Ergänzungskomponente gelöst, die zum Bereitstellen eines Schlüssels für eine bestehende Komponente ausgebildet ist, wobei die bestehende Komponente keinen eigenen Schlüssel aufweist. Die Ergänzungskomponente ist zum Durchführen des Erfindungsgemäßen Verfahrens für die bestehende Komponente, die keinen eigenen Schlüssel aufweist ausgebildet. Dies hat den Vorteil, dass bereits bestehende Komponenten für das Verfahren nachgerüstet werden können. Derartige Retrofit-Lösungen sind insbesondere bei älteren Anlagen von Interesse, da diese so kostengünstig auf einen modernen Standard erweitert werden können.

Weiterhin wird das Problem durch ein Produktionssystem gelöst, das mehrere Komponenten aufweist, die jeweils zum Durchführen eines erfindungsgemäßen Verfahrens ausgebildet sind. Die Komponenten sind jeweils zum Durchführen eines oder mehrerer Produktionsschritte ausgebildet. Ferner können die Komponenten in Kombination zum Produzieren des Produkts durch Kombination mehrerer Produktionsschritte ausgebildet sein. Das vorliegende Verfahren ist insbesondere bei komplexen Produktionssystemen (z.B. mit einer Vielzahl an Produktionsschritten) von Vorteil, da ohne weiteren Aufwand jede Komponente seinen Anteil an einem Produktionsdatensatz bzw. seinen Teilproduktionsdatensatz zur Verfügung stellen kann. Das Bereitstellen der Datensätze ist insbesondere von Vorteil, wenn dies mittels Pub-Sub-Mechanismen, z. B. gemäß OPC UA geschieht.

Die Aufgabe wird weiterhin durch ein Produktionsleitsystem gelöst. Das Produktionsleitsystem ist dabei insbesondere zum Zusammenfassen von mehreren Teil-Produktionsdatensätzen, die durch ein erfindungsgemäßes Verfahren generiert wurden, zu zumindest einem Produktionsdatensatz ausgebildet.

Im Folgenden wird die Erfindung anhand der in den Figuren dargestellten Ausführungsbeispiele näher beschrieben und erläutert. Es zeigen:
- FIG 1: eine Komponente und deren Sub-Komponenten,
- FIG 2: eine Komponente im Detail,
- FIG 3: ein System mit mehreren Komponenten und einem Produktionsleitsystem,
- FIG 4: ein Ausführungsbeispiel eines Systems aus der Prozessindustrie und
- FIG 5: ein schematisches Ablaufdiagramm einer Ausführungsform des Verfahrens.

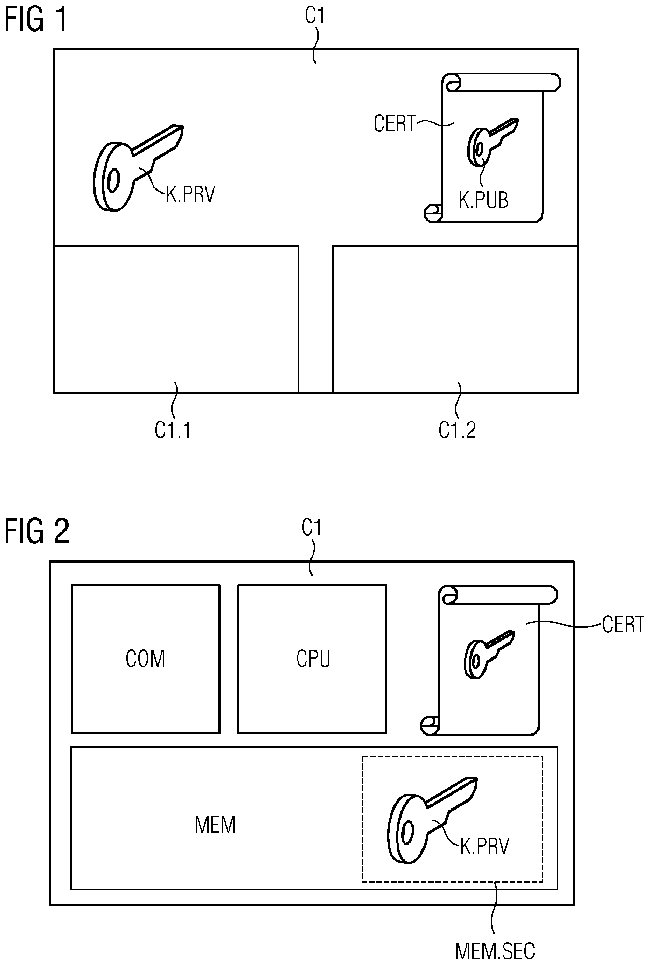

FIG 1 zeigt eine Komponente C1, die zum Durchführen eines Produktionsschritts an einem Vorprodukt ausgebildet ist. Als Bestätigung und zur Nachverfolgung, dass die Komponente C1 an dem Produktionsschritt beteiligt ist bzw. war, ist die Komponente C1 dazu ausgebildet, eine digitale Signatur an einem Rohdatensatz durchzuführen. Zum Bereitstellen einer digitalen Signatur weist die Komponente C1 beispielsweise zur Teilnahme an einem so genannten PKI-Verfahren ein Schlüsselzertifikat ZERT auf, das wiederum einen öffentlichen Schlüssel K.PUB beinhaltet. Die Komponente C1 selbst weist den dazu passenden privaten Schlüssel KPRV auf, mit dessen Hilfe eine digitale Signatur durchgeführt werden kann. Mit dem öffentlichen Schlüssel K.PUP kann die Signatur dann verifiziert werden.

Die Komponente C1 weist weiterhin zwei Sub-Komponenten C1.1 und C1.2 auf. Diese weisen in dieser Ausführungsform keinen eigenen Schlüssel auf, sondern sind darauf angewiesen, dass die übergeordnete Komponente C1 mit ihrem privaten Schlüssel K.PRV für die Sub-Komponenten C1.1, C1.2 mitsigniert.

FIG 2 zeigt eine Komponente C1, die einen Prozessor CPU und einen Speicher MEM aufweist. Der Speicher MEM kann dabei als nichtflüchtiger Speicher ausgebildet sein, der zum Abspeichern eines privaten Schlüssels K.PRV ausgebildet ist. Der Speicher MEM kann weiterhin einen sicheren Speicher MEM.SEC aufweisen, der gegen unbefugten Zugriff, z.B. durch Verschlüsselung, geschützt ist. Der sichere Speicher MEM.SEC kann als separates Modul, z. B. als Trust-Anchor-Modul oder als Trusted-Platform-Modul ausgebildet sein. Die Komponente C1 weist weiterhin eine Kommunikationsschnittstelle COM auf, die zur Kommunikation mit weiteren Komponenten, Sub-Komponenten, einer übergeordneten Prozess-/Industriesteuerung und/ oder einem Produktionsleitsystem dienen kann.

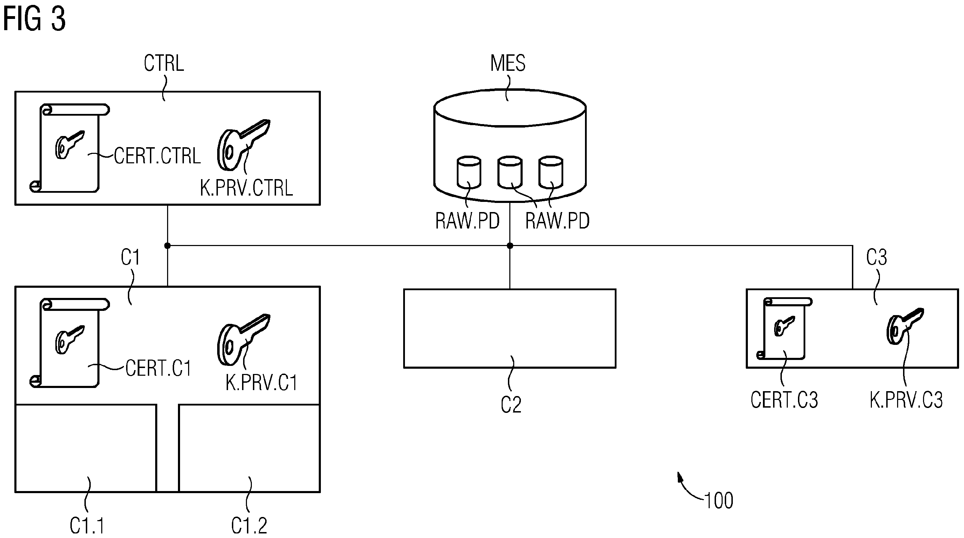

FIG 3 zeigt ein Produktionssystem 100 mit einer Komponente C1, wie sie aus der FIG 1 bekannt ist. Des Weiteren sind Komponenten C2 und C3 gezeigt, die mit einer Steuerung CTRL und der Komponente C1 über ein Kommunikationssystem verbunden sind. Das Kommunikationssystem kann vorzugsweise ein industrielles Kommunikationssystem, wie PROFIBUS oder PROFINET sein. Des Weiteren ist ein Produktionsleitsystem MES zu sehen, welches Rohdatensätze RAW.PD zur Verfügung stellt. Die Steuerung CTRL und die Komponente C1 sowie C3 weisen jeweils ein Schlüsselzertifikat CERT.CTRL, CERT.C1, CERT.C3 sowie einen privaten Schlüssel K.PRV.CTRL, K.PRV.C1, K.PRV.C3 auf.

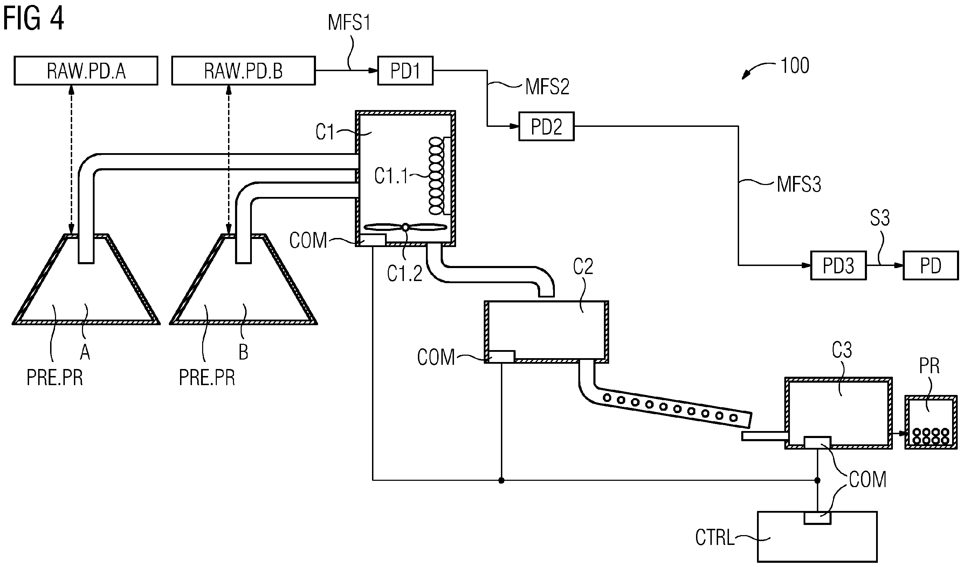

Die Komponente C2 weist keinen eigenen Schlüssel oder ein eigenes Zertifikat auf. Für die Komponente C2 könnte beispielsweise die Steuerung CTRL mit ihrem Zertifikat mitsignieren. Das in FIG 3 gezeigte System 100 könnte nun in einem System 100 gemäß FIG 4 zur Anwendung kommen.

FIG 4 zeigt ein Ausführungsbeispiel eines Systems 100 aus der Prozessindustrie, in dem eine Ausführungsform des erfindungsgemäßen Verfahrens zur Anwendung kommt. Ein Rohstoff A sowie ein Rohstoff B stehen als Vorprodukt PRE.PR zur Verfügung. Eine erste Komponente C1 führt einen ersten Produktionsschritt MFS1 durch. Die erste Komponente C1 ist in diesem Fall ein Rührkessel mit Sub-Komponenten C1.1 und C1.2, wobei die Sub-Komponente C1.1 eine Heizvorrichtung und die Komponente C1.2 eine Rührvorrichtung ist. Die erste Komponente vermischt also die Rohstoffe A und B mit einer vorgebbaren Rührgeschwindigkeit bei einer vorgebbaren Temperatur. Rührgeschwindigkeit und Temperatur sind Beispiele für Prozessdaten. Die zweite Komponente C2 ist eine Presseneinheit, die aus dem in der ersten Komponente C1 hergestellten Materialgemisch einzelne Pellets, Tabletten oder ähnliches presst. Die Komponente C3 ist eine Verpackungsmaschine, die eine definierte Anzahl von Pellets zu einem Endprodukt PR zusammenstellt und diese verpackt. Alle Komponenten C1, C2, C3 weisen eine Kommunikationsschnittstelle COM auf, die zur Kommunikation mit einer übergeordneten Steuerung CTRL dient, die ebenfalls eine Kommunikationsschnittstelle COM aufweist.

Dem Rohstoff A ist ein Rohdatensatz RAW.PD.A zugewiesen, dem Rohstoff B ist ein Rohdatensatz RAW.PD.B zugewiesen. Die erste Komponente C1 führt den ersten Produktionsschritt MFS1 durch, führt die Rohdatensätze RAW.PD.A und RAW.PD.B zusammen und ergänzt diese ggf. noch mit Prozess- und/oder Komponentendaten, signiert diese und stellt diese als ersten Teilproduktionsdatensatz PD1 zur Verfügung. Analog wird das Verfahren von der zweiten Komponente C2 für den zweiten Produktionsschritt MFS2 und von der dritten Komponente C3 für den dritten Produktionsschritt MFS3 durchgeführt, so dass die zweite Komponente C2 einen zweiten Teilproduktionsdatensatz PD2 und die dritte Komponente C3 einen dritten Teilproduktionsdatensatz PD3 zur Verfügung stellt. Ein Schritt des Bereitstellens S3 kann hier bspw. durch die übergeordnete Steuerung CTRL durchgeführt werden, wobei diese die Teil-Produktionsdatensätze PD1, PD2, PD3 zusammenfasst und als Produktionsdatensatz PD zur Verfügung stellt.

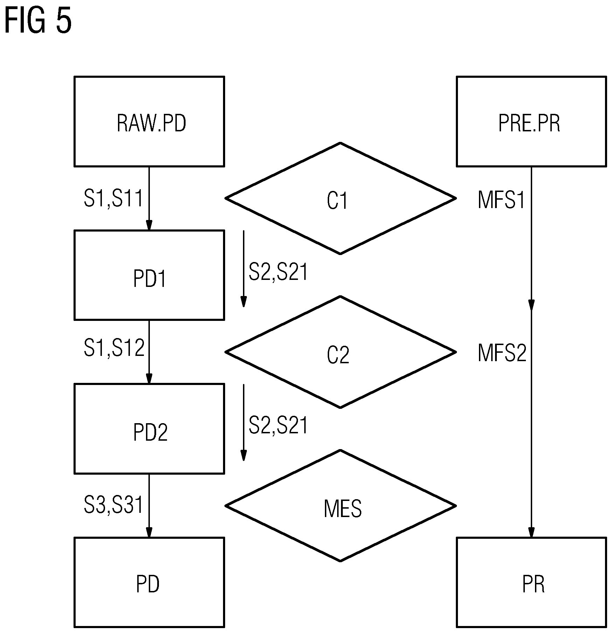

FIG 5 zeigt eine Ausführungsform eines Verfahrens zum sicheren Bereitstellen eines Produktionsdatensatzes PD für ein Produkt PR unter Anwendung mehrerer Aspekte des Verfahrens. Dazu werden von der ersten Komponente C1 und der zweiten Komponente C2 folgende Schritte durchgeführt:
- Erhalten S1 zumindest eines Rohdatensatzes RAW.PD durch die erste Komponente C1, der Rohdatensatz RAW.PD ist einem Vorprodukt PRE.PR zugeordnet;
- Ergänzen S11 des Rohdatensatzes RAW.PD um Prozessdaten des von der ersten Komponente C1 durchzuführenden ersten Produktionsschritts MFS1; optional ist hier ebenfalls ein Ergänzen S12 des Rohdatensatzes RAW.PD durch Komponentendaten der an dem Produktionsschritt MFS beteiligten ersten Komponente C1 und/oder deren Sub-Komponenten C1.1, C1.2 (nicht gezeigt) möglich;
- Generieren S2 zumindest eines ersten Teil-Produktionsdatensatzes PD1 durch digitales Signieren S21 zumindest eines Teils des Rohdatensatzes RAW.PD, wobei die Prozessdaten vorzugsweise mit signiert werden; das digitale Signieren S21 erfolgt mit einem privaten Schlüssel (nicht gezeigt) der ersten Komponente C1, die am Vorprodukt PRE.PR den ersten Produktionsschritt MFS1 durchführt;
- Ergänzen S12 des verbleibenden Teils des Rohdatensatzes RAW.PD und/oder des ersten Teil-Produktionsdatensatzes PD1 durch Komponentendaten der an dem zweiten Produktionsschritt MFS2 beteiligten zweiten Komponente;
- Generieren S2 zumindest eines zweiten Teil-Produktionsdatensatzes PD2 durch digitales Signieren S21 zumindest eines Teils des verbleibenden Teils des Rohdatensatzes RAW.PD; das digitale Signieren S21 erfolgt mit einem privaten Schlüssel (nicht gezeigt) der zweiten Komponente C2, die am Vorprodukt PRE.PR den zweiten Produktionsschritt MFS2 durchführt und
- Bereitstellen S3 eines Produktionsdatensatzes PD durch Zusammenfassen der Teil-Produktionsdatensätze PD1, PD2.

Ergänzend oder alternativ kann auch der Schritt Bereitstellen S31 eines Produktionsdatensatzes PD auf Basis aller relevanten Teil-Produktionsdatensätze PD1, PD2 durchgeführt werden.

Der verbleibende Teil des Rohdatensatzes, der noch nicht von der ersten Komponente C1 signiert wurde kann auch erst zum zweiten Produktionsschritt MFS2 erhalten S1 werden. Der erste Teil-Produktionsdatensatz PD1 kann als Rohdatensatz RAW.PD für den zweiten Produktionsschritt MFS2 dienen oder dazu noch verändert werden.

Die gezeigte Reihenfolge ist dabei als Beispiel zu verstehen und kann beliebig verändert werden, wobei auch einzelne Schritte parallel durchgeführt oder untereinander ausgetauscht und/oder wiederholt werden können.

Zusammenfassend betrifft die Erfindung ein Verfahren zum sicheren Bereitstellen eines Produktionsdatensatzes PD für ein Produkt PR. Die Erfindung betrifft weiterhin eine Komponente C1, C2, C3, eine Erweiterungskomponente ein System 100 und ein Produktionsleitsystem MES. Um auf sichere Art und Weise einen Produktionsdatensatz zur Verfügung zu stellen, anhand dessen nachvollziehbar ist, welche Komponenten an der Produktion eines Produkts beteiligt waren werden folgende Schritte vorgeschlagen:
- Erhalten S1 zumindest eines Rohdatensatzes RAW.PD, der einem Vorprodukt PRE.PR zugeordnet ist,
- Generieren S2 zumindest eines Teil-Produktionsdatensatzes PD1, PD2, PD3 durch digitales Signieren S21 zumindest eines Teils des Rohdatensatzes RAW.PD, wobei das digitale Signieren S21 mit einem privaten Schlüssel K.PRV einer ersten Komponente C1, C2, C3 erfolgt, die am Vorprodukt PRE.PR zumindest einen Produktionsschritt MFS1, MFS2, MFS3 durchführt.

## Patentansprüche

1. Verfahren zum sicheren Bereitstellen eines Produktionsdatensatzes (PD) für ein Produkt (PR) umfassend die Schritte:
- Erhalten (S1) zumindest eines Rohdatensatzes (RAW.PD), der einem Vorprodukt (PRE.PR) zugeordnet ist,
- Generieren (S2) zumindest eines Teil-Produktionsdatensatzes (PD1, PD2, PD3) durch digitales Signieren (S21) zumindest eines Teils des Rohdatensatzes (RAW.PD), wobei das digitale Signieren (S21) mit einem privaten Schlüssel (K.PRV) einer Komponente (C1, C2, C3) erfolgt, die am Vorprodukt (PRE.PR) zumindest einen Produktionsschritt (MFS1, MFS2, MFS3) durchführt.

2. Verfahren nach Anspruch 1, wobei das Produkt (PR) durch Ausführen einer oder mehrerer Produktionsschritte (MFS1, MFS2, MFS3) am Vorprodukt (PRE.PR) hergestellt wird.

3. Verfahren nach einem der vorhergehenden Ansprüche, umfassend den Schritt:
- Bereitstellen (S3) eines Produktionsdatensatzes (PD) durch Zusammenfassen von einem oder mehreren Teil-Produktionsdatensätzen (PD1, PD2, PD3) zu einem Produktionsdatensatz (PD) .

4. Verfahren nach einem der vorhergehenden Ansprüche, wobei die Komponente (C1, C2, C3) für an dem Produktionsschritt (MFS1, MFS2, MFS3) beteiligte Sub-Komponenten (C1.1, C1.2) signiert.

5. Verfahren nach einem der vorhergehenden Ansprüche, umfassend den Schritt:
- Ergänzen (S11) des Rohdatensatzes (RAW.PD) um Prozessdaten des Produktionsschritts (MFS1, MFS2, MFS3), wobei die Prozessdaten vorzugsweise mit signiert werden.

6. Verfahren nach einem der vorhergehenden Ansprüche, umfassend den Schritt:
- Ergänzen (S12) des Rohdatensatzes (RAW.PD) und/oder der Teil-Produktionsdatensätzen (PD1, PD2, PD3) durch Komponentendaten der an dem Produktionsschritt (MFS1, MFS2) beteiligten Komponente (C1, C2, C3) und/oder Sub-Komponenten (C1.1, C1.2).

7. Verfahren nach einem der vorhergehenden Ansprüche, umfassend den Schritt:
- Bereitstellen (S31) eines Produktionsdatensatzes (PD) auf Basis aller relevanten Teil-Produktionsdatensätze (PD1, PD2, PD3).

8. Komponente (C1, C2, C3) aufweisend einen privaten Schlüssel (K.PRV), wobei die Komponente (C1, C2, C3) zum Durchführen zumindest eines Produktionsschritts (MS) an einem Vorprodukt (PRE.PR) und zum Durchführen eines Verfahrens gemäß einem der Ansprüche 1 bis 7 ausgebildet ist.

9. Komponente (C1, C2, C3) nach Anspruch 8, aufweisend einen Prozessor (CPU) und einen Speicher (MEM), wobei der Speicher den privaten Schlüssel (K.PRV) aufweist und der Prozessor zum digitalen Signieren (S21) zumindest eines Teils eines Rohdatensatzes (RAW.PD), der dem Vorprodukt (PRE.PR) zugeordnet ist, mittels des privaten Schlüssels (K.PRV) ausgebildet ist.

10. Ergänzungskomponente ausgebildet zum Bereitstellen eines Schlüssels (K.PRV) für eine bestehende Komponente (C1, C2, C3) und zum Durchführen eines Verfahrens gemäß einem der Ansprüche 1 bis 7, wobei die bestehende Komponente (C1, C2, C3) keinen eigenen Schlüssel (K.PRV) aufweist.

11. Produktionssystem (100) aufweisend mehrere Komponenten (C1, C2) gemäß einem der Ansprüche 8 bis 10.

12. Produktionsleitsystem (MES) ausgebildet zum Bereitstellen zumindest eines Rohdatensatzes (PRE.PD) gemäß einem Verfahren nach einem der Ansprüche 1 bis 7, wobei der Rohdatensatz (PRE.PD) einem Vorprodukt (PRE) zugeordnet ist.

13. Produktionsleitsystem (MES) nach Anspruch 12, ferner ausgebildet zum Zusammenfassen von mehreren Teil-Produktionsdatensätzen (PD1, PD2, PD3) zu zumindest einem Produktionsdatensatz (PD).
